# EUROPEAN PATENT APPLICATION

(11) **EP 4 530 322 A1**
(43) Date of publication of application: **02.04.2025**
(21) Application number: 24195763.8
(22) Date of filing: 22.08.2024
(51) Int. Cl.: C09D 11/101, C09D 11/322, C09D 11/38

(54) **INKJET INK, METHOD FOR FORMING CURED PRODUCT, AND CURED PRODUCT**

(30) Priority: 26.09.2023 JP 2023163742
(71) Applicant: KONICA MINOLTA, INC., Tokyo 100-7015 (JP)
(72) Inventor: Mori, Hisashi, Tokyo, 100-7015 (JP); Miyano, Masashi, Tokyo, 100-7015 (JP)
(74) Representative: Gille Hrabal Partnerschaftsgesellschaft mbB Patentanwälte

(57) **Abstract**

The active energy ray-curable inkjet ink includes a polymerizable compound, inorganic particles, and silica particles. The silica particles are hydrophobized and have no polymerizable group, the average particle diameter of the silica particles is smaller than the median diameter of the inorganic particles, and a content of the silica particles on a mass basis is smaller than a content of the inorganic particles on a mass basis.

## Description

### BACKGROUND OF THE INVENTION

### 1. Field of the Invention

The present invention relates to an inkjet ink, a method for forming a cured product, and a cured product.

### 2. Description of Related Art

An inkjet ink containing inorganic particles such as titanium oxide as a white pigment and conductive particles is known. The inorganic particles have a problem that they tend to settle in the ink during storage or on standby before ejection, and once they have settled, they are less likely to be redispersed.

In order to solve this problem, in the ink composition for inkjet recording described in Japanese Unexamined Patent Publication No. 2013-181055, silica particles having silanol groups on the surfaces thereof are used in combination with inorganic pigments.

Note that in the active energy ray-curable inkjet ink described in Japanese Unexamined Patent Publication No. 2019-157062 that similarly contains silica particles, silica particles whose surfaces are modified with a (meth)acrylate compound are used in order to suppress settlement due to aggregation of the silica particles.

Japanese Unexamined Patent Publication No. 2013-181055 describes that the silica particles may make the settled inorganic pigment easy to be redispersed. However, according to the findings of the present inventors, even when the same silica particles as those of Japanese Unexamined Patent Publication No. 2013-181055 were used in an active energy ray-curable inkjet ink of containing a polymerizable compound, settled inorganic pigments of were not easily redispersed. Furthermore, even when silica particles whose surfaces are modified with a (meth)acrylate compound as described in Japanese Unexamined Patent Publication No. 2019-157062 are used, settled inorganic pigments are not easily redispersed in an active energy ray-curable inkjet ink.

In addition, according to another finding of the present inventors, an active energy ray-curable inkjet ink to which silica particles similar to those of Japanese Unexamined Patent Publications Nos. 2013-181055 and 2019-157062 are added is more likely to cause ejection bending from an inkjet head. Furthermore, the durability of members such as the inkjet head and the flow path tends to decrease.

### SUMMARY OF THE INVENTION

An aspect of the present invention for solving the above-described problems relates to the following active energy ray-curable inkjet inks [1] to [10]:.
[1] An active energy ray-curable inkjet ink, comprising:
   a polymerizable compound; an inorganic particle; and a silica particle, wherein
   the silica particle is hydrophobized and has no polymerizable group,
   an average particle diameter of the silica particle is smaller than a median diameter of the inorganic particle, and
   a content of the silica particle on a mass basis is less than a content of the inorganic particle on the mass basis.
[2] The active energy ray-curable inkjet ink according to [1], wherein
   the polymerizable compound includes a (meth)acrylate.
[3] The active energy ray-curable inkjet ink according to [2], wherein
   the (meth)acrylate includes a monofunctional polymerizable compound having an aromatic ring.
[4] The active energy ray-curable inkjet ink according to any one of [1] to [3], wherein
   the active energy ray-curable inkjet ink is substantially free of water and substantially free of organic solvent.
[5] The active energy ray-curable inkjet ink according to any one of [1] to [4], wherein
   the average particle diameter of the silica particle is 1/20 or less of the median diameter of the inorganic particle.
[6] The active energy ray-curable inkjet ink according to any one of [1] to [5], wherein
   a content of the silica particle is 0.01% by mass or more and 5% by mass or less based on a total mass of the active energy ray-curable inkjet ink.
[7] The active energy ray-curable inkjet ink according to any one of [1] to [6], wherein
   the inorganic particle has an average particle diameter of 0.5 µm or more and 5 µm or less.
[8] The active energy ray-curable inkjet ink according to any one of [1] to [7], wherein
   the inorganic particle has a D₅₀/D₉₀ of 0.1 or more and 0.9 or less.
[9] The active energy ray-curable inkjet ink according to any one of [1] to [8], wherein
   the inorganic particle is a phosphorescent pigment.
[10] The active energy ray-curable inkjet ink according to any one of [1] to [9], further comprising:
   a thermal curing agent.

Another aspect of the present invention for solving the above problems relates to the following methods for forming a cured product [11] to [12].

[11] A method for forming a cured product, comprising:
applying the active energy ray-curable inkjet ink according to any one of [1] to [10] to a base material; and
irradiating the applied active energy ray-curable inkjet ink with an active energy ray.

[12] The method according to [11], wherein
the applying the active energy ray-curable inkjet ink to the base material is performed while circulating the active energy ray-curable inkjet ink.

Another aspect of the present invention for solving the aforementioned problem relates to the following cured product [13].

[13] A cured product formed from the active energy ray-curable inkjet ink according to any one of [1] to [10].

### DESCRIPTION OF THE PREFERRED EMBODIMENTS

Hereinafter, one or more embodiments of the present invention will be described with reference to the drawings. However, the scope of the invention is not limited to the disclosed embodiments.

### 1 Inkjet ink

An embodiment of the present invention relates to an active energy ray-curable inkjet ink (hereinafter, also simply referred to as "ink"). The ink includes a polymerizable compound, inorganic particles, and hydrophobized silica particles (i.e., subjected to hydrophobization treatment).

In the ink according to the present embodiment, it is considered that the silica particles, which are particles smaller than the inorganic pigment, adsorb to the surface of the inorganic pigment. The silica particles, by being adsorbed onto the surface of the inorganic pigment, inhibit packing of the settled inorganic particles and aggregation of the inorganic particles. Thus, the silica particles are thought to facilitate re-dispersion of the settled inorganic particles.

The ink according to the present embodiment is an active energy ray-curable ink containing a polymerizable compound. The hydrophobized silica particles contained in the ink are easily wetted by the polymerizable compound which is a liquid component. Therefore, the silica particles are favorably dispersed in the ink according to the present embodiment. Since the well-dispersed silica is well adsorbed to the inorganic particles, it is considered that the settled inorganic particles are easily redispersed in the ink according to the exemplary embodiment. Note that the silica particles described in Patent Literature 1 are hydrophilized silica particles. Such silica particles do not have good wettability with a polymerizable compound. Therefore, it is considered that the silica particles described in Patent Literature 1 are less likely to be adsorbed onto inorganic particles, making it difficult to increase the redispersibility of the settled inorganic particles.

Further, the ink according to the present embodiment contains silica particles having no polymerizable group. In the silica particle described in Patent Literature 2, the surface of which is modified with a (meth)acrylate compound, the (meth)acryloyl group on the surface undergoes a polymerization reaction during storage of the ink, during flow of the ink, or when the ink is heated inside an inkjet head. Next, the silica particles are aggregated with each other by the polymerization reaction, and thus the silica particles are more likely to be detached from the surfaces of the inorganic particles. Therefore, it is considered that the silica particles were less likely to increase the redispersibility of the settled inorganic particles.

When the settled inorganic particles cannot be redispersed, the concentration of the inorganic particles in the inkjet ink to be ejected is more likely to fluctuate, or the viscosity of the inkjet ink fluctuates, resulting in unstable ejection. In addition, when the inkjet ink before ejection is circulated in the ink channel or the inkjet head, the circulation of the inkjet ink may be difficult to stabilize. In the present embodiment, the inorganic particles in which the silica particles are settled are easily redispersed, and thus these problems are less likely to occur.

In addition, the inorganic particles usually have high hardness. The inorganic particles having high hardness aggregated in the ink may come into contact with a member of the inkjet head or the ink channel to deteriorate the member. Furthermore, the aggregated inorganic particles may adhere to the nozzle surface and peel off the water-repellent film on the ejection surface of the nozzle plate, or may scrape and deform the nozzle opening portion, thereby causing ejection bending or ejection failure of the ink. On the other hand, in the present embodiment, the silica particles favorably wetted with the polymerizable compound are favorably adsorbed to the inorganic particles, thereby suppressing the aggregation of the inorganic particles. In addition, the silica particles used in the present embodiment are less likely to be separated from the surface of the inorganic pigment and less likely to cause aggregation of the inorganic particles even when the silica particles are heated inside the inkjet head during storage or flow of the ink. Therefore, the ink according to the present embodiment is less likely to decrease the durability of members such as the inkjet head and the ejection property of the ink.

Hereinafter, each component will be described.

### 1-1. Polymerizable compound

The polymerizable compound is a compound that is polymerized and crosslinked by irradiation with active energy rays.

The polymerizable compound may be a monomer, an oligomer, a polymer, and a mixture thereof.

The polymerizable compound may be a monofunctional compound or a polyfunctional compound. When it is desired to make the cured product flexible, it is preferable to include a monofunctional compound, and when it is desired to increase the hardness of the cured product, it is preferable to include a polyfunctional compound. Furthermore, from the viewpoint of achieving a balance between these, the polymerizable compound may include both a monofunctional compound and a polyfunctional compound.

The polymerizable compound may be a radically polymerizable compound or a cationically polymerizable compound. The polymerizable compound may be used in combination of a radically polymerizable compound and a cationically polymerizable compound.

The radically polymerizable compound is a compound having a radically polymerizable ethylenically unsaturated bond.

Examples of the compound having a radically polymerizable ethylenically unsaturated bond include an unsaturated carboxylic acid and a salt thereof, an unsaturated carboxylic acid ester compound, an unsaturated carboxylic acid urethane compound, an unsaturated carboxylic acid amide compound, and an anhydride thereof. Included are acrylonitrile, styrene, unsaturated polyesters, unsaturated polyethers, unsaturated polyamides, unsaturated urethanes, and the like. Examples of the unsaturated carboxylic acid include (meth) acrylic acid, itaconic acid, crotonic acid, isocrotonic acid, and maleic acid.

Among these, the radically polymerizable compound is preferably an unsaturated carboxylic acid ester compound; and more preferably a (meth)acrylate. Since the (meth)acrylate itself has high thermal stability, the thermal stability of the ink may also be enhanced. Therefore, an ink containing a (meth)acrylate has high thermal stability inside an inkjet head and is less likely to cause ejection bending. The (meth)acrylate may be a monomer which will be described later, an oligomer, a mixture of the monomer and the oligomer, a modified product, an oligomer having a polymerizable functional group, or the like.

Note that in the present specification, (meth)acrylate indicates acrylate or methacrylate, (meth) acryloyl indicates acryloyl or methacryloylm, and (meth) acrylic indicates acrylic or methacrylic.

Examples of the monofunctional (meth)acrylate include isoamyl (meth)acrylate, stearyl (meth)acrylate, lauryl (meth)acrylate, octyl (meth)acrylate, decyl (meth)acrylate, isomyristyl (meth)acrylate, and isostearyl (meth)acrylate. Included are 2-phenoxyethyl (meth)acrylate, 2-ethylhexyl-diglycol (meth)acrylate, 2-hydroxybutyl (meth)acrylate, 2-(meth) acryloyloxyethyl hexahydrophthalic acid. Butoxyethyl (meth)acrylate, ethoxydiethylene glycol (meth)acrylate, and methoxydiethylene glycol (meth)acrylate are included. Methoxypolyethylene glycol (meth)acrylate, methoxypropylene glycol (meth)acrylate, and o-phenylphenoxyethyl (meth)acrylate are included. Benzyl (meth)acrylate, phenol (meth)acrylate, m-phenoxybenzyl (meth)acrylate, and cyclic trimethylolpropane formal (meth)acrylate are included. Ethoxylated phenoxy (meth)acrylates, alkoxylated phenol (meth)acrylates, tetrahydrofurfuryl (meth)acrylate, isobornyl (meth)acrylate are included. 2-Hydroxyethyl (meth)acrylate, 2-hydroxypropyl (meth)acrylate, 2-hydroxy-3-phenoxypropyl (meth)acrylate, 2-hydroxy-o-phenylphenolpropyl (meth)acrylate are included. 2-(Meth) acryloyloxyethylsuccinic acid, 2-(meth) acryloyloxyethylphthalic acid, 2-(meth) acryloyloxyethyl-2-hydroxyethyl-phthalic acid, t-butylcyclohexyl (meth)acrylate and the like are included.

Examples of the polyfunctional (meth)acrylate include triethylene glycol di (meth)acrylate, tetraethylene glycol di (meth)acrylate, and polyethylene glycol di (meth)acrylate. Dipropylene glycol di (meth)acrylate, tripropylene glycol di (meth)acrylate, and polypropylene glycol di (meth)acrylate are included. 1,4-utanediol di (meth)acrylate, 1,6-hexanediol di (meth)acrylate, and 1,9-nonanediol di (meth)acrylate are included. Neopentyl glycol di (meth)acrylate, tricyclodecane dimethanol diacrylate, and dimethylol-tricyclodecane di (meth)acrylate are included. Bisphenol A type di (meth)acrylate, hydroxypivalic acid neopentyl glycol di (meth)acrylate are included. Difunctional (meth)acrylates including polytetramethylene glycol di (meth)acrylate, polyethylene glycol diacrylate, dipropylene glycol diacrylate, and tripropylene glycol diacrylate are included. Trimethylolpropane tri (meth)acrylate, pentaerythritol tri (meth)acrylate, and pentaerythritol tetra (meth)acrylate are included. Dipentaerythritol hexa (meth)acrylate, and ditrimethylolpropane tetra (meth)acrylate are included. (Meth)acrylates having three or more functional groups, such as glycerolpropoxytri (meth)acrylate and pentaerythritolethoxytetra (meth)acrylate are included.

The (meth)acrylate may be a modified product. Examples of the (meth)acrylate that is a modified product include ethylene oxide-modified (meth)acrylates such as ethylene oxide-modified trimethylolpropane tri (meth)acrylate and ethylene oxide-modified pentaerythritol tetraacrylate. Caprolactone-modified (meth)acrylates including caprolactone-modified trimethylolpropane tri (meth)acrylate and the like are included. Caprolactam modified (meth)acrylates including caprolactam modified dipentaerythritol hexa (meth)acrylate and the like are included.

The (meth)acrylate may be a polymerizable oligomer. Examples of the (meth)acrylate that is a polymerizable oligomer include an epoxy (meth)acrylate oligomer and an aliphatic urethane (meth)acrylate oligomer. Aromatic urethane (meth)acrylate oligomers, polyester (meth)acrylate oligomers, and linear (meth) acryl oligomers are included.

Examples of the cationically polymerizable compound include epoxy compounds, vinyl ether compounds, and oxetane compounds.

Examples of the epoxy compounds include 3,4-epoxycyclohexylmethyl-3',4'-epoxycyclohexanecarboxylate, bis(3,4-epoxycyclohexylmethyl) adipate, and vinylcyclohexene monoepoxide. E-caprolactone-modified 3,4-epoxycyclohexylmethyl 3', 4'-epoxycyclohexanecarboxylate and 1-methyl-4-(2-methyloxiranyl)-7-oxabicyclo [4,1,0] heptane are included. Cycloaliphatic epoxy resins such as 2-(3,4-epoxycyclohexyl-spiro-5,5-3,4-epoxy) cyclohexanone-meta-dioxane and bis(2,3-epoxycyclopentyl) ether are included. Diglycidyl ether of neopentyl glycol, diglycidyl ether of 1,4-butanediol, diglycidyl ether of 1,6-hexanediol, and triglycidyl ether of glycerin are included. Triglycidyl ether of trimethylolpropane, diglycidyl ether of ethylene glycol, and diglycidyl ether of diethylene glycol are included. Diglycidyl ether of triethylene glycol, diglycidyl ether of propylene glycol, and diglycidyl ether of polyethylene glycol are included. Included are diglycidyl ethers of propylene glycol. Included are aliphatic epoxy compounds including polyglycidyl ethers of polyether polyols obtained by adding one or more alkylene oxides (such as ethylene oxide and propylene oxide) to aliphatic polyhydric alcohols such as ethylene glycol, diethylene glycol, triethylene glycol, propylene glycol, and glycerin. Di-or polyglycidyl ether of bisphenol A or an alkylene oxide adduct thereof, a di-or polyglycidyl ether of hydrogenated bisphenol A or an alkylene oxide adduct thereof, and an aromatic epoxy compound including a novolac-type epoxy resin are included.

Examples of the vinyl ether compound include ethyl vinyl ether, N-butyl vinyl ether, isobutyl vinyl ether, octadecyl vinyl ether, cyclohexyl vinyl ether, hydroxybutyl vinyl ether, and 2-ethylhexyl vinyl ether. Included are cyclohexanedimethanol monovinyl ether, N-propyl vinyl ether, isopropyl vinyl ether, and isopropenyl ether-o-propylene carbonate. Included are monovinyl ether compounds including dodecyl vinyl ether, diethylene glycol monovinyl ether, octadecyl vinyl ether, and the like. Included are ethylene glycol divinyl ether, diethylene glycol divinyl ether, triethylene glycol divinyl ether, propylene glycol divinyl ether, and dipropylene glycol divinyl ether. Di-or trivinyl ether compounds, including butanediol divinyl ether, hexanediol divinyl ether, cyclohexanedimethanol divinyl ether, and trimethylolpropane trivinyl ether, and the like are included.

Examples of the oxetane compound include 3-hydroxymethyl-3-methyloxetane, 3-hydroxymethyl-3-ethyloxetane, 3-hydroxymethyl-3-propyloxetane, and 3-hydroxymethyl-3-n-butyloxetane. Included are 3-hydroxymethyl-3-phenyloxetane, 3-hydroxymethyl-3-benzyloxetane, 3-hydroxyethyl-3-methyloxetane, and 3-hydroxyethyl-3-ethyloxetane. Included are 3-hydroxyethyl-3-propyloxetane, 3-hydroxyethyl-3-phenyloxetane, 3-hydroxypropyl-3-methyloxetane, and 3-hydroxypropyl-3-ethyloxetane. 3-hydroxypropyl-3-propyloxetane, 3-hydroxypropyl-3-phenyloxetane, 3-hydroxybutyl-3-methyloxetane, and 3,3'-(oxybismethylene) bis(3-ethyloxetane) are included. Included are 1,4-bis {[(3-ethyl-3-oxetanyl) methoxy] methyl} benzene, 3-ethyl-3-(2-ethylhexyloxymethyl) oxetane, di [1-ethyl (3-oxetanyl)] methyl ether and the like.

The polymerizable compound preferably includes a compound having an aromatic ring in the molecule. The aromatic ring is structurally stable and thus is less likely to be subjected to hydrogen abstraction. Therefore, the polymerizable compound having an aromatic ring in the molecule is less likely to cause yellowing of a cured product due to a hydrogen abstraction reaction caused by a large amount of radicals generated during curing of the ink. In addition, the compound having an aromatic ring in the molecule is preferably a monofunctional polymerizable compound. The polymerizable compound having an aromatic ring at a terminal has high wettability to inorganic particles, and thus facilitates re-dispersion of settled inorganic particles.

The content of the polymerizable compound having an aromatic ring is preferably 10% by mass or more and 80% by mass or less and more preferably 20% by mass or more and 70% by mass or less based on the total mass of the ink.

Examples of the polymerizable compound having an aromatic ring include phenol 4EO modified (meth)acrylate, 2-phenoxyethyl (meth)acrylate, o-phenylphenoxyethyl (meth)acrylate, benzyl (meth)acrylate, and phenol (meth)acrylate. m-Phenoxybenzyl (meth)acrylate, alkoxylated phenol (meth)acrylate, 2-hydroxy-o-phenylphenolpropyl (meth)acrylate, EO-modified o-phenylphenol (meth)acrylate are included. Included are bisphenol fluorene di (meth)acrylate (A-BPEF), bisphenol A-type 10EO modified di (meth)acrylate, bisphenol A-type di (meth)acrylate, bisphenol A-type PO modified di (meth)acrylate, and bisphenol A-type EO modified di (meth)acrylate. Included are 2-hydroxy-3-phenoxypropyl (meth)acrylate and the like. Among these, phenol 4EO modified (meth)acrylate, 2-phenoxyethyl (meth)acrylate, o-phenylphenoxyethyl (meth)acrylate, benzyl (meth)acrylate, phenol (meth)acrylate, m-phenoxybenzyl (meth)acrylate, alkoxylated phenol (meth)acrylate, 2-hydroxy-o-phenylphenolpropyl (meth)acrylate, EO modified o-phenylphenol (meth)acrylate, and 2-hydroxy-3-phenoxypropyl (meth)acrylate are preferable.

The content of the polymerizable compound is preferably 30% by mass or more and 97% by mass or less, more preferably 60% by mass or more and 95 % by mass or less based on the total mass of the ink . The content of the monofunctional polymerizable compound having an aromatic ring is preferably 10% by mass or more and 60% by mass or less, and more preferably 20% by mass or more and 50% by mass or less and or less based on the total mass of the ink.

### 1-2. Inorganic particles

The type of the inorganic particles is not particularly limited. The inorganic particles may be particles of pigments which impart characteristics such as color tone, conductivity, insulating properties, heat dissipation properties, and negative thermal expansion coefficient to a cured product formed by the ink, or particles which are added separately from the pigments to adjust the physical properties of a cured product.

The inorganic particles may be any particles containing atoms other than carbon as a main component. Containing as a main component means that atoms other than carbon account for 50% by mass or more of the total mass of the inorganic particles.

Examples of the inorganic particles include the following:
silica particles,
metal oxide particles such as titanium oxide particles, alumina particles, zirconia particles, zinc oxide particles, and iron oxide particles,
metal hydroxide particles such as magnesium hydroxide particles, aluminum hydroxide particles, and calcium hydroxide particles,
nitride particles such as silicon nitride particles, titanium nitride particles, and aluminum nitride particles, glitter pigment particles (or conductive particles) such as silver particles,
glass particles such as glass beads and glass flakes,
silicate particles such as magnesium silicate particles,
ceramic particles such as kaolin particles, calcined kaolin particles, clay, talc, zeolite and the like,
particles in which a plurality of materials are composited, such as pearl pigment particles, and phosphorescent pigment particles capable of absorbing light having a predetermined wavelength to accumulate light energy and emitting the accumulated light energy as light having a wavelength different from that of the absorbed light for a long time.

Examples of the phosphorescent pigment include those obtained by subjecting a base crystal which is a metal compound to an activation treatment.

Examples of the base crystal include sulfides such as zinc sulfide, calcium sulfide, germanium sulfide, strontium sulfide, and yttrium sulfide. Included are metal oxides such as calcium oxide, strontium oxide, barium oxide, alumina and cerium oxide. Aluminates such as calcium aluminate, strontium aluminate, and barium aluminate are included. Among these, strontium aluminate (SrAl ₂O₄, Eu, Dy) is preferable.

Examples of the activator for activating the base crystal include europium, terbium, yttrium, zirconium, dysprosium, and barium. Of these, europium and dysprosium are preferred.

The peak wavelengths of the excited spectra of the phosphorescent pigments are preferably 300 nm or more and 400 nm or less. When the peak wavelength of the excitation spectrum of the phosphorescent pigment is in the above range, the phosphorescent pigment may be sufficiently excited by sunlight, and the cured product is easily adapted to outdoor use.

The peak wavelengths of the emission spectra of the phosphorescent pigments may be, for example, 400 nm or more and 700 nm or less, and are preferably 450 nm or more and 600 nm or less from the viewpoint of further enhancing the visibility of the cured product.

Among these inorganic particles, glitter pigment particles, zinc oxide particles, and phosphorescent pigment particles are preferable. Furthermore, the zinc oxide particles, pearl pigment particles, and phosphorescent pigment particles are more preferable, and the phosphorescent pigment particles are still more preferable, because silica particles are easily adsorbed thereto and the redispersibility thereof after settlement is easily enhanced.

The shape of the inorganic particles is not particularly limited and may be a spherical shape or a non-spherical shape such as a flat plate shape or a whisker shape. Among these, the spherical shape is preferable because the effect of improving redispersibility after settlement by silica particles may be easily enhanced. For example, the inorganic particles have an aspect ratio, which is the ratio of the long axis to the short axis, of preferably 1.0 or more and 1.5 or less, more preferably 1.0 or more and 1.2 or less.

The long axis and the minor axis of the inorganic particle are each obtained from the inorganic particle in the ink captured in an image captured with a transmission electron microscope (TEM), a scanning electron microscope (SEM), or the like. The average of the long axes in the image and the average of the short axes in the image of 1000 inorganic particles arbitrarily selected from the image may be used.

The median diameters of the inorganic particles in the ink are not particularly limited, and may be 0.2 µm or more and 20 µm or less, preferably 0.3 µm or more and 10 µm or less, more preferably 0.5 µm or more and 5 µm or less, and still more preferably 1.0 µm or more and 5 µm or less. The larger the median diameter, easier to increase the adsorption amount of the silica particles to the inorganic particles, and the redispersibility after the settlement is easily enhanced by the silica particles. In addition, the larger the median diameter, the settled inorganic particles are less likely to be packed and more likely to be redispersed. The smaller the median diameter, the better the ejectability from an inkjet head, and the less likely members such as an inkjet head are to be damaged even if aggregated.

The median diameter of the inorganic particles may be a particle diameter (D₅₀) at which the cumulative value in the volume-based particle diameter distribution is 50%.

The particle diameter (D₉₀) at which the cumulative value in the volume-based particle diameter distribution of the inorganic particles in the ink is 90% may be set to 1.0 µm or more and 20 µm or less, preferably 1.5 µm or more and 10 µm or less, and more preferably 2.0 µm or more and 8 µm or less. It is easy to increase the adsorption amount of the silica particles to the inorganic particles, and it is easy to increase redispersibility after settlement by the silica particles. In addition, as D₉₀ is larger, the settled inorganic particles are less likely to be packed and more likely to be redispersed. The smaller D₉₀ is, the better the ejectability from an inkjet head is, and even when aggregated, members such as an inkjet head are less likely to be damaged.

In addition, the inorganic particles have a D₅₀/D₉₀ of preferably 0.2 or more and 0.8 or less, more preferably 0.3 or more and 0.6 or less. As the D₅₀/D₉₀ becomes smaller, a cured product in which inorganic particles are densely packed may be formed by broadening the particle diameter distribution, and the weather resistance of the cured product may be improved.

The D₅₀ and D₉₀ of the inorganic particles may be values measured using a particle diameter measuring device, for example, LUMiSizer, manufactured by LUM Japan Co., Ltd.

The specific gravity of the inorganic particles may be 2 or more and 6 or less, preferably 2.5 or more and 5 or less, more preferably 3 or more and 4.5 or less. As the specific gravity is larger, the inorganic particles are more likely to be settled in the ink, and the effect of improving redispersibility after settlement by the silica particles is remarkably seen.

The inorganic particles may be dispersed with a dispersant. The inorganic particles may be dispersed by only one type of dispersant, or may be dispersed by two or more types of dispersants.

Examples of the dispersant include a carboxylic acid ester having a hydroxy group, a salt of a long-chain polyaminoamide and a high-molecular-weight acid ester, a salt of a high-molecular-weight polycarboxylic acid, and a salt of a long-chain polyaminoamide and a polar acid ester. Included are high molecular weight unsaturated acid esters, high molecular weight copolymers, modified polyurethanes, modified polyacrylates, and polyether ester type anionic surfactants. Examples thereof include naphthalenesulfonic acid-formalin condensate salts, aromatic sulfonic acid-formalin condensate salts, and polyoxyethylene alkyl phosphate esters. Included are polyoxyethylene nonylphenyl ether, stearylamine acetate, and the like. Examples of commercially available products of the pigment dispersant include Solsperse series (manufactured by Avecia, "Solsperse" is a registered trademark of the company), PB series (manufactured by Ajinomoto Fine - Techno Co., Inc), and EFKA series (manufactured by BASF, "EFKA" is a registered trademark of the company).

The content of the dispersant is preferably 0.01% by mass or more and 20% by mass or less based on the total mass of the inorganic particles.

The content of the inorganic particles may be set according to the use of the inorganic particles. For example, the content of the inorganic particles may be 1% by mass or more and 60% by mass or less, is preferably 2% by mass or more and 50% by mass or less, and is more preferably 3% by mass or more and 30% by mass or less based on the total mass of the ink. The lower the content of the inorganic particles is, the higher the redispersibility of the settled inorganic particles is.

### 1-3. Silica particles

The average particle diameter of the silica particles of the present embodiment is smaller than the median diameter of the inorganic particles. The silica particles smaller than the inorganic particles are easily adsorbed to the surfaces of the inorganic particles and easily suppress packing or aggregation of the inorganic particles. Thus, the silica particles are thought to facilitate re-dispersion of the settled inorganic particles. Furthermore, for the same reason, it is considered that when an ink containing an inorganic pigment is used, the silica particles suppress a decrease in the durability of a member such as an inkjet head, the ejection property of the ink, or the like.

The silica particles may be particles composed of silicon dioxide (SiOz), or may be particles containing silicon dioxide as a main component and other substances. Alternatively, the silica particles may be core-shell type particles each including a core and a shell containing silicon dioxide. "Containing as a main component" means that silicon dioxide accounts for 50% by mass or more of the total mass of the particles. From the viewpoint of enhancing the redispersibility and circulation stability of the settled inorganic particles, the silica particles are preferably particles composed of silicon dioxide alone. The silica particles may be a natural product or a synthetic product, but a synthetic product is preferable since the average particle diameter and the particle diameter distribution are easily adjusted.

The silica particles that are synthetic products may be silica particles produced by a dry method or silica particles produced by a wet method. Examples of the silica particles produced by a dry method include combustion silica particles produced by a combustion method and deflagration silica particles produced by a deflagration method. Examples of the silica particles produced by a wet method include settled silica particles produced by a settlement method, silica gel produced by a gel method, colloidal silica, and sol-gel silica. Among these, the combustion silica, the deflagration silica, and the sol-gel silica are preferable, and the sol-gel silica is more preferable since the adsorptivity to the inorganic particles is high.

The silica particles are subjected to hydrophobization treatment. The silica particles subjected to the hydrophobic treatment are easily wetted with the polymerizable compound and are easily dispersed in the ink. Therefore, the hydrophobized silica particles are easily adsorbed to the surface of inorganic surfaces in the ink, which makes it easier to increase the redispersibility of settled inorganic particles and to suppress deterioration of the durability and ejection properties of components..

The method of the hydrophobization treatment is not particularly limited, and treatment with a silane coupling agent having a hydrophobic group (such as an alkyl group), a titanium coupling agent having a hydrophobic group (such as an alkyl group), polysiloxane, disilazane, silicone oil, a long-chain fatty acid, and the like may be performed. Examples of the compound for the hydrophobization treatment include chlorosilanes including butyltrichlorosilane, dimethyldichlorosilane, trimethylchlorosilane, phenyltrichlorosilane, diphenyldichlorosilane, t-butyldimethylchlorosilane, vinyltrichlorosilane, and the like. Tetramethoxysilane, methyltrimethoxysilane, dimethyldimethoxysilane, phenyltrimethoxysilane, diphenyldimethoxysilane, and o-methylphenyltrimethoxysilane are included. p-Methylphenyltrimethoxysilane, N-butyltrimethoxysilane, i-butyltrimethoxysilane, hexyltrimethoxysilane, octyltrimethoxysilane, and decyltrimethoxysilane are included. Dodecyltrimethoxysilane, tetraethoxysilane, methyltriethoxysilane, dimethyldiethoxysilane, phenyltriethoxysilane, diphenyldiethoxysilane, and i-butyltriethoxysilane are included. Decyltriethoxysilane, vinyltriethoxysilane, γ-methacryloxypropyltrimethoxysilane, γ-glycidoxypropyltrimethoxysilane, and γ-glycidoxypropylmethyldimethoxysilane are included. γ-Mercaptopropyltrimethoxysilane, γ-chloropropyltrimethoxysilane, γ-aminopropyltrimethoxysilane, and γ-aminopropyltriethoxysilane are included . Alkoxysilanes including γ-(2-aminoethyl) aminopropyltrimethoxysilane, γ-(2-aminoethyl) aminopropylmethyldimethoxysilane and the like are included. Polysiloxanes including hexamethylcyclotrisiloxane, octamethylcyclotetrasiloxane, decamethylcyclopentasiloxane, hexamethyldisiloxane, octamethyltrisiloxane and the like are included. Hexamethyldisilazane, hexaethyldisilazane, hexapropyldisilazane, hexabutyldisilazane, hexapentyldisilazane, hexahexyldisilazane, hexacyclohexyldisilazane are included. Disilazane including hexaphenyldisilazane, divinyltetramethyldisilazane, dimethyltetravinyldisilazane and the like are included. Dimethyl silicone oil, methyl hydrogen silicone oil, methylphenyl silicone oil,alkyl-modified silicone oil,chloroalkyl-modified silicone oil,chlorophenyl-modified silicone oil are included. Silicone oils including fatty acid-modified silicone oil,polyether-modified silicone oil,alkoxy-modified silicone oil,carbinol-modified silicone oil,amino-modified silicone oil,fluorine-modified silicone oil, and terminal reactive silicone oil are included. Long-chain fatty acids such as undecylic acid, lauric acid, tridecylic acid, dodecylic acid, myristic acid, palmitic acid, pentadecylic acid, stearic acid, heptadecylic acid, arachic acid, montanic acid, oleic acid, linoleic acid, and arachidonic acid or salts thereof are included.

Note that in the present specification, the hydrophobization treatment does not include a treatment in which a polymerizable group is contained. Examples of the polymerizable group include an epoxy group, a (meth)acryloyl group, and a vinyl group. A hydroxyl group or a silanol group does not react with a polymerizable compound, and therefore is not included in the polymerizable groups.

The silica particles subjected to the hydrophobization treatment preferably have a hydrophobicity of 30% or more and 80% or less, more preferably 50% or more and 75% or less.

Note that the hydrophobicity of the silica particles is measured by adding 0.2% by mass of the silica particles to 50 ml part of ion-exchanged water. Methanol is added dropwise from a burette while stirring with a magnetic stirrer, and the mass fraction of methanol in the methanol-water mixed solution is the mass fraction of methanol at the end point when the entire amount of the silica particles has sunk.

The average particle diameter of the silica particles is preferably 1/2 or less, more preferably 1/10 or less, still more preferably 1/20 or less, and particularly preferably 1/50 or less of the median diameter of the inorganic particles. As the ratio of the average particle diameter of the silica particles to the median diameter of the inorganic particles is smaller, the silica particles may be more easily adsorbed onto the surfaces of the inorganic particles. In particular, when the average particle diameter of the silica particles is set to 1/20 or less of the median diameter of the inorganic particles, the ratio of the specific surface area of the silica particles to the surface area of the inorganic particles may be increased, and the silica particles may be more easily adsorbed onto the surfaces of the inorganic particles. The lower limit of the ratio of the average particle diameter of the silica particles to the median diameter of the inorganic particles is not particularly limited, but is preferably 1/500 or more.

The average particle diameter of the silica particles is preferably 0.005 µm or more and 1.5 µm or less, more preferably 0.01 µm or more and 1.0 µm or less, still more preferably 0.05 µm or more and 0.5 µm or less. As the average particle diameter of the silica particles becomes smaller, the redispersibility of the settled inorganic particles increases. When the average particle diameter of the silica particles is increased to some extent, the specific surface area of the inorganic particles to which the silica particles adhere is reduced, and thus it is possible to make it difficult for the nozzle surface to be damaged by the inorganic particles.

The average particle diameter of the silica particles may be a value published by the manufacturer. Furthermore, it may also be measured as volume-average size using a particle diameter measuring device and a dynamic light scattering method . For example, a slurry containing silica particles is diluted with ion-exchanged water so that the content of the silica particles is 0.1% by mass, the diluted slurry is irradiated with laser light, and the intensity of scattered light scattered from the silica inorganic particles is measured as a change over time in microseconds. The scattering intensity distribution caused by the detected silica particles is applied to a normal distribution, and the Z-average particle diameter of the silica particles is determined by a cumulant analysis method. As a particle diameter measuring device, for example, Zetasizer Nano ZS manufactured by Spectris Co., Ltd. may be used. The particle diameter measurement device is equipped with data analysis software, which may automatically analyze the measurement data to calculate the Z-average particle diameter

The shape of the silica particles is preferably spherical. For example, silica particles have an aspect ratio, which is a ratio of a long axis to a short axis, of preferably 1.0 or more and 1.5 or less, and more preferably 1.0 or more and 1.2 or less. The long axis and the short axis of the silica particles may be measured in the same manner as the long axis and the short axis of the inorganic particles described above.

The content of the silica particles may be set to 0.01% by mass or more and 5% by mass or less based on the total mass of the ink, and is preferably 0.01% by mass or more and 3% by mass or less, more preferably 0.01% by mass or more and 2% by mass or less, and still more preferably 0.01% by mass or more and 1.5% by mass or less. When the content of the silica particles is 0.01% by mass or more, the redispersibility of the settled inorganic particles is enhanced. When the content of silica particles is 5% by mass or less, deterioration of ejection properties due to silica particles not adsorbed to the inorganic particles and damage to components such as the inkjet head are suppressed,.

The ratio of the content of the silica particles to the content of the inorganic particles (content of silica particles (mass basis)/content of inorganic particles (mass basis)) is preferably 0.0004 or more and 0.3 or less, more preferably 0.004 or more and 0.2 or less, and still more preferably 0.01 or more and 0.1 or less.

### 1-3. Other components

The ink may further contain other components such as a photopolymerization initiator, an organic pigment, a dye, a thermal curing agent, a surfactant, a fluorescent brightener, a gelling agent, and a polymerization inhibitor.

The photopolymerization initiator may be a radical initiator when the ink contains a radically polymerizable compound, and may be a cationic initiator (photoacid generator) when the ink contains a cationically polymerizable compound. Note that when polymerization is started by irradiation with an electron beam, the ink does not have to contain a photopolymerization initiator.

Examples of the radical polymerization initiator include a hydrogen abstraction type photopolymerization initiator and an intramolecular cleavage type photopolymerization initiator. The hydrogen abstraction type photopolymerization initiator includes an intramolecular hydrogen abstraction type photopolymerization initiator, and an intermolecular hydrogen abstraction type photopolymerization initiator, and the like.

The intramolecular hydrogen abstraction type photopolymerization initiator is a photopolymerization initiator which is excited by irradiation with active energy rays and generates a hydrogen abstraction reaction in the molecule to generate a radical. Examples of the intramolecular hydrogen abstraction type photopolymerization initiator include methyl benzoylformate-based photopolymerization initiators such as methyl phenylglyoxylate. Included are oxyphenyl-based photoinitiators such as a mixture of oxyphenylacetic acid-2-[2-oxo-2-phenylacetoxy-ethoxy] ethyl ester and oxyphenylacetic acid 2-[2-hydroxy-ethoxy] ethyl ester. Among these, a compound having a structure of glyoxylic acid, such as a methyl benzoylformate-based photopolymerization initiator, is preferable because hydrogen atom is hardly extracted from the molecular chain of the polymerizable compound during polymerization.

Examples of commercially available products of the intramolecular hydrogen abstraction type photopolymerization initiator include Omnirad MBF and Omnirad 754 (both are manufactured by IGM Resins, "Omnirad" is a registered trademark of the company).

The intermolecular hydrogen abstraction type photopolymerization initiator is a photopolymerization initiator which is excited by irradiation with active energy rays such as ultraviolet rays and abstracts hydrogen from other molecules to generate radicals. Examples of the intermolecular hydrogen abstraction type photopolymerization initiator include benzophenone, methyl o-benzoylbenzoate, 4-phenylbenzophenone, and 4-,-4'-dichlorobenzophenone. Included are hydroxybenzophenone, 4-benzoyl-4'-methyl-diphenyl sulfide, and acrylated benzophenone . Included are benzophenone-based initiators, including 3, 3', 4, 4'-tetra (t-butylperoxycarbonyl) benzophenon, 3,3'-dimethyl-4-methoxybenzophenone, and the like. Included are thioxanthone-based initiators such as 2-isopropylthioxanthone, 2,4-dimethylthioxanthone, 2,4-diethylthioxanthone, 2,4-dichlorothioxanthone, and the like.

Examples of commercially available products of the intermolecular hydrogen abstraction type photopolymerization initiator include Omnirad 500 (manufactured by IGM Resins), Speedcure ITX (manufactured by Sartomer, "Speedcure" is a registered trademark of Arkema France) and the like.

Examples of the intramolecular cleavage-type photopolymerization initiator include 2-hydroxy-2-methyl-1-phenylpropan-1-one and benzyl dimethyl ketal. Included are 4-(2-hydroxyethoxy) phenyl-(2-hydroxy-2-propyl) ketone, and 1-hydroxycyclohexyl-phenyl ketone. Included are acetophenone-based initiators such as 2-methyl-2-morpholino (4-methylthiophenyl) propan-1-one, and 2-benzyl-2-dimethylamino-1-(4-morpholinophenyl)-butanone. Benzoin-based initiators such as benzoin, benzoin methyl ether, and benzoin isopropyl ether are included. 2,4,6-Trimethylbenzoin diphenyl phosphineoxide, bis(2,4,6-trimethylbenzoin) phenyl phosphineoxide and other acyl phosphineoxide initiators and the like are included.

Examples of commercially available products of the intramolecular cleavage-type photopolymerization initiator include Omnirad 127, Omnirad 184, Omnirad 651, Omnirad 2959, Omnirad 819, and Esacure One (all manufactured by IGM Resins Inc).

The content of the photopolymerization initiator is preferably 3% by mass or more and 20% by mass or less, more preferably 3% by mass or more and 15% by mass or less, still more preferably 3% by mass or more and 10% by mass or less, and particularly preferably 5% by mass or more and 10% by mass or less, based on the total mass of the polymerizable composition. When the content is 3% by mass or more, the curability and adhesiveness of the ink may be further enhanced.

Examples of the organic pigments include red pigments, yellow pigments, blue pigments, and white pigments, which are used in inks for image formation. As these pigments, known pigments may be used. Examples of the dye include a red dye, a yellow dye, and a blue dye, which are used in an ink for image formation. As these dyes, known dyes may be used.

Examples of the thermal curing agent include polyfunctional epoxy compounds, polyfunctional oxetane compounds, imidazole, 2-methylimidazole, 2-ethylimidazole, 2-ethyl-4-methylimidazole, 2-phenylimidazole, and 4-phenylimidazole. Included are imidazole derivatives such as 1-cyanoethyl-2-phenylimidazole and 1-(2-cyanoethyl)-2-ethyl-4-methylimidazole, dicyandiamide, benzyldimethylamine, and 4-(dimethylamino)-N, N-dimethylbenzylamine. Amine compounds such as 4-methoxy-N, N-dimethylbenzylamine and 4-methyl-N, N-dimethylbenzylamine are included. Included are phosphine compounds such as tributylphosphine and triphenylphosphine, hydrazine compounds such as adipic acid dihydrazide and sebacic acid dihydrazide, and amino resins such as melamine resins, benzoguanamine resins, melamine derivatives, and benzoguanamine derivatives. Included are blocked isocyanate compounds, cyclocarbonate compounds, cyclic (thio) ether compounds, bismaleimides, and carbodiimide resins. Included are aromatic amines, reaction products of an amine compound and an epoxy compound, as well as phthalic anhydride, trimellitic anhydride, pyromellitic anhydride, hexahydrophthalic anhydride and tetrahydrophthalic anhydride. Included are 3-chlorophthalic anhydride, 4-chlorophthalic anhydride, benzophenonetetracarboxylic anhydride, succinic anhydride, methylsuccinic anhydride, dimethylsuccinic anhydride, and dichlorosuccinic anhydride. Included are acid anhydrides such as methylnadic acid, dodecylsuccinic acid, chlorendic anhydride, maleic anhydride and the like.

When the thermal curing agent is used, a curing catalyst may be used in combination. Examples of the curing catalyst include imidazole derivatives, guanamines, polyamines, organic acid salts thereof, epoxy adducts, triazine derivatives, tertiary amines, organic phosphines, phosphonium salts, and quaternary ammonium salts.

The content of the thermal curing agent is not particularly limited, but may be, for example, 0.1% by mass or more and 10% by mass or less based on the total mass of the ink.

Note that when the ink contains a thermal curing agent, it is preferable to contain, as a polymerizable compound, a compound having, for example, an epoxy group, an oxetane group, and a carboxyl group, which are functional groups reactive with the thermal curing agent. On the other hand, even when the polymerizable compound does not contain a functional group that reacts with the thermal curing agent, the polymerization of the polymerizable compound may be promoted by the exothermic reaction of the thermal curing agent.

Examples of the surfactant include anionic surfactants such as dialkylsulfosuccinates, alkylnaphthalenesulfonates, and fatty acid salts. Polyoxyethylene alkyl ethers and polyoxyethylene alkyl allyl ethers are included. Nonionic surfactants such as acetylene glycols and polyoxyethylene-polyoxypropylene block copolymers are included. Alkylamine salts, and quaternary ammonium salts Included are the cationic surfactants of and such as and , and silicone-based and fluorine-based surfactants.

The content of the surfactant is not particularly limited, but may be, for example, 0.001% by mass or more and less than 1.0% by mass based on the total mass of the ink.

The gelling agent is a compound that turns the ink into a gel state at room temperature (25°C) and into a sol state when heated (for example, 80°C). For example, the gelling agent is preferably a compound that dissolves in liquid components (such as a polymerizable compound and an organic solvent) contained in the ink at a temperature higher than the gelation temperature of the ink and crystallizes at a temperature equal to or lower than the gelation temperature of the ink. The gelation temperature means a temperature at which, when an ink solated or liquefied by heating is cooled, the ink undergoes a phase transition from sol to gel and the viscosity of the ink suddenly changes. Specifically, when the solated or liquefied ink is cooled while the viscosity thereof is measured by a rheometer (for example, MCR300 manufactured by Anton Paar), the temperature at which the viscosity rapidly increases may be defined as the gelation temperature of the ink.

Examples of the gelling agent include ketone wax, ester wax,petroleum-based wax,plant-based wax,animal-based wax, and mineral-based wax. Included are hydrogenated castor oil, modified waxes, higher fatty acids, higher alcohols, hydroxystearic acid, fatty acid amides including N-substituted fatty acid amides and special fatty acid amides. Included are higher amines, esters of sucrose fatty acids, synthetic waxes, dibenzylidene sorbitol, dimer acids and dimer diols.

The content of the gelling agent is preferably 1.0% by mass or more and 10.0% by mass or less, more preferably 2.0% by mass or more and 7.5% by mass or less, and still more preferably 2.0% by mass or more and 3.5% by mass or less, based on the total mass of the ink.

Examples of the polymerization inhibitor include an N-oxyl-based polymerization inhibitor, a phenol-based polymerization inhibitor, a quinone-based polymerization inhibitor, an amine-based polymerization inhibitor, and a copper dithiocarbamate-based polymerization inhibitor. Only one type of the polymerization inhibitor may be contained in the ink, or two or more types thereof may be contained in combination.

Examples of the N-oxyl-based polymerization inhibitor include 4-hydroxy-2, 2,6,6-tetramethylpiperidine-N-oxyl (TEMPO) and 4-hydroxy-2, 2,6,6-tetramethyl-piperidine-N-oxyl. Included are 4-oxo-2, 2,6,6-tetramethyl-piperidine-N-oxyl, 4-methoxy-2, and 2,6,6-tetramethyl-piperidine-N-oxyl. Included are 4-acetoxy-2, 2,6,6-tetramethyl-piperidine-N-oxyl and the like. Examples of commercially available products of the N-oxyl-based polymerization inhibitor include Irgastab UV10 (manufactured by BASF ("Irgastab" is a registered trade mark of the company)).

Examples of the phenol-based polymerization inhibitor include 2,6-di-tert-butylphenol, 2,4-di-tert-butylphenol, and 2-tert-butyl 4,6-dimethylphenol. Included are 2,6-di-tert-butyl-4-methylphenol and 2,4,6-tri-tert-butylphenol. 2,6-Included are di-t-butyl-p-cresol (butylated hydroxytoluene BHT), 4-methoxyphenol, 2-methoxy-4-methylphenol, and the like.

Examples of the quinone-based polymerization inhibitor include hydrochinone, methoxyhydroquinone, benzoquinone, 1,4-naphthoquinone, p-tert-butylcatechol and the like.

Examples of the amine-based polymerization inhibitor include alkylated diphenylamine, N,N'-diphenyl-p-phenylenediamine, and phenothiazine.

Examples of the copper dithiocarbamate-based polymerization inhibitor include copper dimethyldithiocarbamate, copper diethyldithiocarbamate, copper dibutyldithiocarbamate and the like.

The content of the polymerization inhibitor is not particularly limited, but may be, for example, 0.01% by mass or more and 0.5% by mass or less based on the total mass of the ink.

The ink may contain a solvent other than the polymerizable compound, such as water and an organic solvent.

Examples of the organic solvent include aliphatic alcohols, aromatic alcohols, diols, triols, glycol ethers, poly (glycol) ethers, lactams, formamide, and acetamide. Included are long chain alcohols, ethylene glycol, propylene glycol, diethylene glycol, triethylene glycol, glycerine, dipropylene glycol, and glycol butyl ether. Included are diethylene glycol diethyl ether, diethylene glycol methyl ethyl ether, diethylene glycol dibutyl ether, dipropylene glycol dimethyl ether, tetraethylene glycol dimethyl ether, polyethylene glycol, and polypropylene glycol. Included are methyl oleate, methyl caprylate, methyl caprate, methyl laurate, methyl myristate, methyl palmitate, methyl stearate, methyl oleate, and methyl tallowate. Examples thereof include rice bran fatty acid methyl ester, rapeseed fatty acid methyl ester, soybean fatty acid methyl ester, N-butyl palmitate, and N-butyl stearate. Included are rapeseed fatty acid N-butyl, soybean fatty acid N-butyl, rice bran fatty acid i-butyl, rapeseed fatty acid i-butyl, octyl palmitate, octyl oleate, rapeseed fatty acid octyl, and vegetable fatty acid octyl. Included are isopropyl myristate, and palmitic acid isopropylamide. Included are amines, ethers, carboxylic acids, esters, organosulfides, organosulfoxides, sulfones, alcohol derivatives, carbitols, butyl carbitol, cellosolves, ether derivatives, amino alcohols and ketones, and the like.

Note that silica particles are less likely to be wetted with water. Therefore, water easily aggregates the silica particles, and easily inhibits the adsorption of the silica particles to the inorganic particles. From the viewpoint of facilitating adsorption of silica particles to inorganic particles and facilitating redispersion of settled inorganic particles, it is preferred that the ink is substantially free of water. Furthermore, also from the viewpoint of suppressing a decrease in the durability of members such as an inkjet head and suppressing a decrease in the ejection property of the ink, it is preferred that the ink is substantially free of water.

In addition, the silica particles subjected to the hydrophobization treatment are excessively wetted with an organic solvent. Therefore, the organic solvent strongly adheres to the periphery of the silica particles, rather makes it difficult for the silica particles to approach the inorganic particles, and thus may inhibit the adsorption of silica to the inorganic particles. From the viewpoints of facilitating adsorption of silica particles to inorganic particles, facilitating redispersion of settled inorganic particles, suppressing deterioration in the durability of components such as an inkjet head, and suppressing deterioration in the ejection properties of the ink, it is preferred that the ink is substantially free of organic solvents.

In the present specification, the ink being substantially free of a certain component means that the content of the component based on the total mass of the ink is 5% by mass or less. From the above-described viewpoints, the content of water based on the total mass of the ink is preferably 0% by mass or more and 1% by mass or less and more preferably 0% by mass or more and 0.1% by mass or less. In addition, the content of the organic solvent based on the total mass of the ink is preferably 0% by mass or more and 1% by mass or less, more preferably 0% by mass or more and 0.1% by mass or less.

### 1-4. Physical properties of ink

The viscosity of the ink is not particularly limited, but the viscosity at 25°C is preferably 5 mPa s or more and 1000 mPa s or less, more preferably 20 mPa s or more and 500 mPa s or less. Storage and standby of ink are often performed at about 25°C. The lower the viscosity at 25°C, the easier it is to redisperse the settled inorganic pigment. On the other hand, by moderately increasing the viscosity at 25°C, the settlement of the inorganic pigment may be suppressed.

The viscosity of the composition at 25°C may be a value obtained by a rheometer under the condition of a shear rate of 1000/sec. As the rheometry, stress-controlled rheometry PhysicaMCR series manufactured by Anton Paar Co., Ltd. may be used. The cone plate may have a 75 mm radius and a cone angle of 1.0°.

The ink is preferably capable of forming a cured film having a volume resistivity of 10¹¹ Ω· m or more. The specific surface resistance of the cured film may be measured using Hiresta UX (manufactured by Nitto Seiko Analytech Co., Ltd., MCP HT800).

### 1-5. Method for preparing ink

The ink may be prepared by mixing the above-described components. At this time, components other than the inorganic particles may be mixed first, and the inorganic particles may be added later to the obtained mixture.

In addition, when the inorganic particles are dispersed with a dispersant, a dispersion liquid containing the inorganic particles, the dispersant, and a liquid component may be prepared in advance, and the remaining components may be added thereto and mixed. At this time, in order to increase the solubility of the dispersant and the like, it is preferable to prepare the dispersion liquid by mixing the inorganic particles, the dispersant, and the like while heating.

Furthermore, when the inorganic particles are dispersed with a dispersant, silica particles may be added and dispersed in advance. From the viewpoint of wetting the silica particles with the ink and the viewpoint of allowing the silica particles to enter between the inorganic particles, the silica particles are preferably added in advance at the time of dispersion.

### 2. Method for forming cured product

The ink described above may be used for forming a cured product by being applied to a base material by an inkjet method and cured.

The application of the ink to the base material may be performed by discharging the ink from an inkjet head and landing the ink on the base material.

The method of ejection from the inkjet head may be either an on-demand method or a continuous method. The inkjet head of the on-demand method includes electromechanical conversion methods such as a single cavity type, a double cavity type, a bender type, a piston type, a share mode type, and a shared wall type. Included are electrothermal conversion systems such as a thermal inkjet type and a bubble jet ("bubble jet" is a registered trademark of Canon Inc) type.

These inkjet heads or an image forming apparatus including the inkjet heads may have a configuration in which the ink is circulated inside or outside the inkjet heads. When the ink is discharged while being circulated, if the settlement of the inorganic particles occurs in the circulation channel of the ink, the ejectability of the ink may be deteriorated. In contrast, in the present embodiment, since the redispersibility of the settled inorganic particles is favorable, favorable ejectability may be maintained even when the ink is circulated.

The type of the base material is not particularly limited, and examples thereof include paper, a resin film, an ABS resin plate, an acrylic resin plate, an aluminum plate, a glass plate, a polycarbonate plate, and fabric. The shape of the base material is not particularly limited, and may be various three dimensional shapes in addition to a plate shape, a film shape, and a sheet shape. In addition, the composition may be applied to the space formed inside the base material by various methods.

The ink may be cured by polymerizing and crosslinking the polymerizable compound by irradiation with active energy rays. Examples of the active energy rays include electron beams, ultraviolet rays, α-rays, γ-rays, and X-rays. Among these, ultraviolet rays and electron beams are preferable. The ultraviolet rays are preferably light having peak wavelengths in a range of 360 nm to 410 nm inclusive. Furthermore, the ultraviolet rays are preferably emitted from an LED light source. Since an LED has less radiant heat as compared with a conventional light source (e.g., a metal halide lamp), when an LED is used, an ink is less likely to be melted during the irradiation with the active energy rays, and gloss unevenness and the like are less likely to occur.

When ultraviolet rays are used as the active energy rays, the amount of light per irradiation is preferably 500 mJ/cm² or more and 4000 mJ/cm² or less. When the amount of light is 500 mJ/cm² or more, the curability of the polymerizable compound may be improved. When the amount of light is 4000 mJ/cm² or less, discoloration of the cured product may be suppressed.

When a cured product having a large thickness is formed, ink application and film formation may be repeatedly performed.

Note that the silica particles adsorbed on the surfaces of the inorganic particles are considered to be adsorbed on or attached to the surfaces of the inorganic particles also inside the cured product. Therefore, in the cured product formed in the present embodiment, the surfaces of the inorganic particles are protected by the silica particles, and the abrasion resistance is high.

After the cured product is produced in this manner, a protective film may be formed to cover the cured product with a varnish, a laminate film, an ink, or the like, or the cured product may be post-processed into a desired shape.

### Examples

Hereinafter, the present invention will be specifically described with reference to Examples, but the scope of the present invention is not limited to the description of Examples.

### [Experiment 1]

### 1. Material preparation

An inkjet ink was prepared sing the following materials.

### 1-1. Polymerizable compounds

Monomer 1: Neopentyl glycol diglycidyl ether (difunctional, non-aromatic)
Monomer 2: 1,6-Hexanediol diglycidyl ether (2-functional, non-aromatic)
Monomer 3: Triethylene glycol divinyl ether (bifunctional, non-aromatic)
Monomer 4: 3,3'-(Oxybismethylene) Bis (3-Ethyloxetane) (Bifunctional, Non-Aromatic)
Acrylate 1: Dipropylene glycol diacrylate (difunctional, non-aromatic)
Acrylate 2: Polyethylene glycol (200) diacrylate (bifunctional, non-aromatic)
Acrylate 3: 1,6-Hexanediol Diacrylate (Difunctional, Non-Aromatic)
Acrylate 4: Isobomyl acrylate (monofunctional, non-aromatic)
Acrylate 5: Cyclic trimethylolpropane formal acrylate (monofunctional, non-aromatic)
Acrylate 6: Benzyl acrylate (monofunctional, aromatic)
Acrylate 7: Phenol 4EO acrylate (monofunctional, aromatic)
Acrylate 8: 2-phenoxyethyl acrylate (monofunctional, aromatic)
Acrylate 9: A glycidyl ether group-containing epoxy acrylate oligomer (manufactured by Shin -Nakamura Chemical Co., Ltd., NK oligo EA-1010N) (polyfunctional, aromatic).

### 1-2. Inorganic particles

Inorganic particles 1: Zinc oxides (manufactured by Sakai Chemical Industry Co., Ltd., Candy Zinc 1000 ("Candy Zinz" is a registered trade mark of the same company))
Inorganic particles 2: Sulphuric acid Barium (H-LFM, manufactured by Sakai Chemical Industry Co., Ltd)
   Inorganic particles 3: Pearl pigment (manufactured by Merck & Co., Inc., Iriodin 111 104259 ("Iriodin" is a registered trademark of the company))
   Inorganic particles 4: Phosphorescent pigments (manufactured by Nemoto & Co., Ltd., Luminova G 300F ("Luminova" is a registered trade mark of the company).
      Inorganic particles 5: Phosphorescent pigments (manufactured by Nemoto & Co., Ltd., Luminova G-300FF)

### 1-3. Silica particles

Silica 1: QSG-170 (average particle diameter: 170 nm), degree of hydrophobicity 67%, manufactured by Shin - Etsu Chemical Co., Ltd.)
Silica 2: QSG-130 (average particle diameter: 130 mm), degree of hydrophobicity 67%, manufactured by Shin - Etsu Chemical Co., Ltd.)
Silica 3: Qsg-30 (average particle diameter: 30 nm), degree of hydrophobicity 67%, manufactured by Shin - Etsu Chemical Co., Ltd.)
Silica 4: QSG-10 (average particle diameter: 10 nm), degree of hydrophobicity 67%, manufactured by Shin - Etsu Chemical Co., Ltd.
Silica 5: REOLOSII, MT-10 (average particle diameter: 15 nm) manufactured by Tokuyama Corporation ("REOLOSIL" is a registered trademark of the same company)
Silica 6: REOLOSIL DM-10 (average particle diameter: 15 nm) manufactured by Tokuyama Corporation
Silica 7: REOLOSIL HM 20 L (average particle diameter: 12 nm) manufactured by Tokuyama Corporation
Silica 8: REOLOSII, ZD 30ST (average particle diameter: 7 nm) manufactured by Tokuyama Corporation
Silica 9: SII,FII, NHM 3 N (average particle diameter: 150 nm), manufactured by Tokuyama Corporation "SILFIL" is a registered trademark of the same company)
Silica 10: SANSEAL SP-T (average particle diameter:100 nm) manufactured by Tokuyama Corporation ("Sanseal" is a registered trade mark of the same company)
Silica 11: SANSEAL SP 01P (average particle diameter: 100 nm) manufactured by Tokuyama Corporation
Silica 12: Sanseal SP 04MS (average particle diameter: 400 nm) manufactured by Tokuyama Corporation
Silica 13: SANSEAL SP-03P (average particle diameter 300 nm) manufactured by Tokuyama Corporation
Silica 14: SANSEAL SP-10M (average particle diameter 1000 nm) manufactured by Tokuyama Corporation
Silica 15: SANSEAL SP 10P (average particle diameter: 1000 nm) manufactured by Tokuyama Corporation
Silica 16: REOLOSII, QS-09 (average particle diameter: 20 nm) manufactured by Tokuyama Corporation
Silica 17: SII,FII, NSS-3N (average particle diameter 150 nm) manufactured by Tokuyama Corporation
Silica 18: SANSEAL SS-03 (average particle diameter 300 nm) manufactured by Tokuyama Corporation
Silica 19: SC2300-SVJ (average particle diameter: 500 nm), manufactured by Admatechs Company Limited
Silica 20: SC2500 SMJ (average particle diameter: 500 nm) manufactured by Admatechs Company Limited
Silica 21: PGM-AC-4130Y (average particle diameter: 45 nm) manufactured by Nissan Chemical Industries, Ltd
Silica 22: MEK-AC-4130Y (average particle diameter: 45 nm) manufactured by Nissan Chemical Industries, Ltd.

Note that silica 1 to silica 15 are silica particles that have been hydrophobized and do not contain a polymerizable group. Silica 16 to silica 18 are silica particles that have not been hydrophobized and thus are hydrophilic and do not contain a polymerizable group. The silica 19 is silica particles that have been hydrophobized and include a vinyl group that is a polymerizable group. Silica 20 is silica particles that have been hydrophobized and include a methacryloyl group that is a polymerizable group. The silica 21 is silica particles that have been hydrophobized and contains an acryloyl group which is a polymerizable group. Silica 22 is silica particles that have been hydrophobized and include an acryloyl group that is a polymerizable group.

### 1-4. Photopolymerization initiator

Initiator 1: IGM RESINS BV, Omnirad MBF
Initiator 2: IGM RESINS BV Omnirad 754
Initiator 3: IGM RESINS BV Omnirad 819

### 1-5. Heat curing agent

Thermal curing agent 1: Dicyandiamide
Thermal curing agent 2: Blocked Isocyanate B17982 manufactured by LANXESS
Thermal curing agent 3: 2-Ethyl-4-methylimidazole

### 1-6. Organic solvent

Organic solvent 1: Methyl oleate
Organic solvent 2: Methyl ethyl ketone

### 1-7. Other components

Polymerization inhibitor: Irgastab UV-10 manufactured by Basf SE

### 2. Inkjet ink preparation

### 2-1. Preparation of dispersion liquid

In a polypropylene vessel, 20 parts by mass of the inorganic particles 1 and 80 parts by mass of the monomer 1 were placed together with 50 parts by mass of zirconia beads having a average particle diameter of 0.3 mm. The dispersion treatment was performed for 30 minutes using a paint shaker, and the zirconia beads were removed to prepare a dispersion liquid 1A-1.

In a polypropylene vessel, 20 parts by mass of the inorganic particles 1 and 80 parts by mass of the monomer 2 were placed together with 50 parts by mass of zirconia beads having a average particle diameter of 0.3 mm. The dispersion treatment was performed for 30 minutes using a paint shaker, and the zirconia beads were removed to prepare a dispersion liquid 1A-2.

In a polypropylene vessel, 20 parts by mass of the inorganic particles 1 and 80 parts by mass of the acrylate 1 were placed together with 50 parts by mass of zirconia beads having a average particle diameter: of 0.3 mm. The dispersion treatment was performed for 30 minutes using a paint shaker, and the zirconia beads were removed to prepare a dispersion liquid 1A-3.

The dispersion liquid 1A was prepared in the same manner as the preparation of the dispersion liquid 1B-3 except that the dispersion time was changed to 2 hours.

Dispersion liquid 1A to dispersion liquid 1F were prepared in the same manner as in the preparation of dispersion liquid 1C-3 except that the inorganic particles were changed to inorganic particles 2 to inorganic particles 5, respectively.

The dispersion liquid 1F was prepared in the same manner as the preparation of the dispersion liquid 1G except that the dispersion time was changed to 8 hours.

The dispersion liquid 1F was prepared in the same manner as the preparation of the dispersion liquid 1H except that the dispersion time was changed to 10 hours.

The dispersion liquid 1F was prepared in the same manner as the preparation of the dispersion liquid 1I except that the dispersion time was changed to 16 hours.

Thereafter, the median diameter of the inorganic particles in the dispersion liquid was measured with a particle diameter distribution analyzer (LUMiSizer, manufactured by LUM Japan, Inc) using the Stokes precipitation method.

### 2-2. Preparation of ink

A polymerizable compound, a dispersion liquid, silica particles, a photopolymerization initiator, a thermal curing agent, an organic solvent, water, and a polymerization inhibitor were mixed in the ratios shown in Tables 1 to 10, and filtered through a 30 µm polypropylene pleated filter (manufactured by ROKI TECHNO CO., LTD.) to obtain Inks 1 to 65. Numerical values described in parentheses in the columns of "inorganic particles" and "silica particles" in Tables 1 to 10 are a median diameter and an average particle diameter of each particle in the dispersion liquid.

**[Table 1]**

| Ink No. | | 1 | 2 | 3 | 4 |
|---|---|---|---|---|---|
| Polymerizable compound | Monomer 1 | 73.7 | | 43.7 | 43.7 |
| | Monomer 2 | | 73.7 | | |
| | Monomer 3 | | | 30.0 | |
| | Monomer 4 | | | | 30.0 |
| Inorganic particles | Dispersion liquid 1A-1 (1 µm) (zinc oxide) | 20.0 | | 20.0 | 20.0 |
| | Dispersion liquid 1A-2 (1 µm) (zinc oxide) | | 20.0 | | |
| Silica | Silica 1 (0.17 µm) | 0.2 | 0.2 | 0.2 | 0.2 |
| Photoinitiator | Photoinitiator 1 | 3.0 | 3.0 | 3.0 | 3.0 |
| | Photoinitiator 3 | 3.0 | 3.0 | 3.0 | 3.0 |
| Polymerization inhibitor | | 0.1 | 0.1 | 0.1 | 0.1 |
| Total | | 100.0 | 100.0 | 100.0 | 100.0 |

**[Table 2]**

| Ink No. | | 5 | 6 | 7 | 8 | 9 | 10 | 11 |
|---|---|---|---|---|---|---|---|---|
| Polymerizable compound | Acrylate 1 | 33.7 | 33.7 | 33.7 | 33.7 | 33.7 | 33.7 | 33.7 |
| | Acrylate 2 | 40.0 | | | | | | |
| | Acrylate 3 | | 40.0 | | | | | |
| | Acrylate 4 | | | 40.0 | | | | |
| | Acrylate 5 | | | | 40.0 | | | |
| | Acrylate 6 | | | | | 40.0 | | |
| | Acrylate 7 | | | | | | 40.0 | |
| | Acrylate 8 | | | | | | | 40.0 |
| Inorganic particles | Dispersion liquid 1A-3 (1 µm) (zinc oxide) | 20.0 | 20.0 | 20.0 | 20.0 | 20.0 | 20.0 | 20.0 |
| Silica | Silica 1 (0.17 µm) | 0.2 | 0.2 | 0.2 | 0.2 | 0.2 | 0.2 | 0.2 |
| Photoinitiator | Photoinitiator 1 | 3.0 | 3.0 | 3.0 | 3.0 | 3.0 | 3.0 | 3.0 |
| | Photoinitiator 3 | 3.0 | 3.0 | 3.0 | 3.0 | 3.0 | 3.0 | 3.0 |
| Polymerization inhibitor | | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 |

**[Table 3]**

| Ink No. | | 12 | 13 | 14 | 15 | 16 | 17 | 18 |
|---|---|---|---|---|---|---|---|---|
| Polymerizable compound | Acrylate 1 | 33.7 | 33.7 | 33.7 | 33.7 | 33.7 | 33.7 | 33.7 |
| | Acrylate 7 | 40.0 | 40.0 | 40.0 | 40.0 | 40.0 | 40.0 | 40.0 |
| Inorganic particles | Dispersion 1B (0.5µ 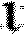 η). (zinc oxide) | 20.0 | | | | | | |
| | Dispersion liquid 1C (7 µm) (barium sulfate) | | 20.0 | | | | | |
| | Dispersion liquid 1D (4 µm) (pearl pigment) | | | 20.0 | | | | |
| | Dispersion liquid 1E (7 µm) (phosphorescent pigment) | | | | 20.0 | | | |
| | dispersion liquid 1F (2.2 µm) (phosphorescent pigment) | | | | | 20.0 | | |
| | Dispersion liquid 1G (1 µm) (phosphorescent pigment) | | | | | | 20.0 | |
| | Dispersion liquid 1H (0.6 µm) (phosphorescent pigment) | | | | | | | 20.0 |
| Silica | Silica 1 (0.17 µm) | 0.2 | 0.2 | 0.2 | 0.2 | 0.2 | 0.2 | 0.2 |
| Photoinitiator | Photoinitiator 1 | 3.0 | 3.0 | 3.0 | 3.0 | 3.0 | 3.0 | 3.0 |
| | Photoinitiator 3 | 3.0 | 3.0 | 3.0 | 3.0 | 3.0 | 3.0 | 3.0 |
| Polymerization inhibitor | | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 |

**[Table 4]**

| Ink No. | | 16 (previously listed) | 19 | 20 | 21 | 22 |
|---|---|---|---|---|---|---|
| Polymerizable compound | Acrylate 1 | 33.7 | 33.4 | 32.9 | 30.9 | 29.4 |
| | Acrylate 7 | 40.0 | 40.0 | 40.0 | 40.0 | 40.0 |
| Inorganic particles | dispersion liquid 1F (2.2 µm) (phosphorescent pigment) | 20.0 | 20.0 | 20.0 | 20.0 | 20.0 |
| Silica | Silica 1 (0.17 µm) | 0.2 | 0.5 | 1.0 | 3.0 | 4.5 |
| Photoinitiator | Photoinitiator 1 | 3.0 | 3.0 | 3.0 | 3.0 | 3.0 |
| | Photoinitiator 3 | 3.0 | 3.0 | 3.0 | 3.0 | 3.0 |
| Polymerization inhibitor | | 0.1 | 0.1 | 0.1 | 0.1 | 0.1 |
| Total | | 100.0 | 100.0 | 100.0 | 100.0 | 100.0 |

**[Table 5]**

| Ink No. | | 23 | 24 | 25 | 26 | 27 | 28 | 29 |
|---|---|---|---|---|---|---|---|---|
| Polymerizable compound | Acrylate 1 | 33.7 | 33.7 | 33.7 | 33.7 | 33.7 | 33.7 | 33.7 |
| | Acrylate 7 | 40.0 | 40.0 | 40.0 | 40.0 | 40.0 | 40.0 | 40.0 |
| Inorganic particles | Dispersion liquid 1F (2.2 µm) (phosphorescent pigment) | 20.0 | 20.0 | 20.0 | 20.0 | 20.0 | 20.0 | 20.0 |
| Silica | Silica 2 (0.1 µm) | 0.2 | | | | | | |
| | Silica 3 (0.03 µm) | | 0.2 | | | | | |
| | Silica 4 (0.01 µm) | | | 0.2 | | | | |
| | Silica 5 (0.015 µm) | | | | 0.2 | | | |
| | Silica 6 (0.015 µm) | | | | | 0.2 | | |
| | Silica 7 (0.012 µm) | | | | | | 0.2 | |
| | Silica 8 (0.007 µm) | | | | | | | 0.2 |
| Photoinitiator | Photoinitiator 1 | 3.0 | 3.0 | 3.0 | 3.0 | 3.0 | 3.0 | 3.0 |
| | Photoinitiator 3 | 3.0 | 3.0 | 3.0 | 3.0 | 3.0 | 3.0 | 3.0 |
| Polymerization inhibitor | | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 |

**[Table 6]**

| Ink No. | | 30 | 31 | 32 | 33 | 34 | 35 | 36 |
|---|---|---|---|---|---|---|---|---|
| Polymerizable compound | Acrylate 1 | 33.7 | 33.7 | 33.7 | 33.7 | 33.7 | 33.7 | 33.7 |
| | Acrylate 7 | 40.0 | 40.0 | 40.0 | 40.0 | 40.0 | 40.0 | 40.0 |
| Inorganic particles | Dispersion liquid 1F (2.2 µm) (phosphorescent pigment) | 20.0 | 20.0 | 20.0 | 20.0 | 20.0 | 20.0 | 20.0 |
| Silica | Silica 9 (0.15 µm) | 0.2 | | | | | | |
| | Silica 10 (0.1 µm) | | 0.2 | | | | | |
| | Silica 11 (0.1 µm) | | | 0.2 | | | | |
| | Silica 12 (0.4µm) | | | | 0.2 | | | |
| | Silica 13 (0.3 µm) | | | | | 0.2 | | |
| | Silica 14 (1 µm) | | | | | | 0.2 | |
| | Silica 15 (1 µm) | | | | | | | 0.2 |
| Photoinitiator | Photoinitiator 1 | 3.0 | 3.0 | 3.0 | 3.0 | 3.0 | 3.0 | 3.0 |
| | Photoinitiator 3 | 3.0 | 3.0 | 3.0 | 3.0 | 3.0 | 3.0 | 3.0 |
| Polymerization inhibitor | | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 |

**[Table 7]**

| Ink No. | | 23 (previously listed) | 37 | 38 | 39 | 40 | 41 | 42 |
|---|---|---|---|---|---|---|---|---|
| Polymerizable compound | Acrylate 1 | 33.7 | 33.7 | 31.7 | 28.7 | 30.7 | 0.7 | 31.7 |
| | Acrylate 7 | 40.0 | | 40.0 | 40.0 | 40.0 | 40.0 | 40.0 |
| | Acrylate 8 | | 40.0 | | | | | |
| Inorganic particles | Dispersion liquid 1F (2.2 µm) (phosphorescent pigment) | 20.0 | 20.0 | 20.0 | 20.0 | 20.0 | 50.0 | 20.0 |
| Silica | Silica 2 (0.1 µm) | 0.2 | 0.2 | 0.2 | 0.2 | 0.2 | 0.2 | 0.2 |
| Photoinitiator | Photoinitiator 1 | 3.0 | 3.0 | 5.0 | 8.0 | 8.0 | 8.0 | |
| | Photoinitiator 2 | | | | | | | 5.0 |
| | Photoinitiator 3 | 3.0 | 3.0 | 3.0 | 3.0 | 1.0 | 1.0 | 3.0 |
| Polymerization inhibitor | | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 |

**[Table 8]**

| Ink No. | | 43 | 44 | 45 | 46 | 47 | 48 | 49 | 50 | 51 |
|---|---|---|---|---|---|---|---|---|---|---|
| Polymerizable compound | Monomer 1 | 71.7 | | | | | | | 41.7 | 41.7 |
| | Monomer 2 | | 71.7 | 71.7 | 68.7 | | | | | |
| | Monomer 3 | | | | | | | | 30.0 | |
| | Monomer 4 | | | | | | | | | 30.0 |
| | Acrylate 1 | | | | | 28.7 | 28.7 | 28.7 | | |
| | Acrylate 2 | | | | | 40.0 | 40.0 | 20.0 | | |
| | Acrylate 9 | | | | | | | 20.0 | | |
| Inorganic particles | Dispersion liquid 1A-1 (1 µm) (zinc oxide) | 20.0 | | | | | | | 20.0 | 20.0 |
| | Dispersion liquid 1A-2 (1 µm) (zinc oxide) | | 20.0 | 20.0 | 20.0 | | | | | |
| | Dispersion liquid 1A-3 (1 µm) (zinc oxide) | | | | | 20.0 | 20.0 | 20.0 | | |
| Silica | Silica 1 (0.17 µm) | 0.2 | 0.2 | 0.2 | 0.2 | 0.2 | 0.2 | 0.2 | 0.2 | 0.2 |
| Photoinitiator | Photoinitiator 1 | 3.0 | 3.0 | 3.0 | 3.0 | 3.0 | 3.0 | 3.0 | 3.0 | 3.0 |
| | Photoinitiator 3 | 3.0 | 3.0 | 3.0 | 3.0 | 3.0 | 3.0 | 3.0 | 3.0 | 3.0 |
| Thermal curing agent | Thermal curing agent 1 | 2.0 | 2.0 | | | | | | | |
| | Thermal curing agent 2 | | | 2.0 | 5.0 | 5.0 | 80 | 5.0 | | |
| | Thermal curing agent 3 | | | | | | | | 2.0 | 2.0 |
| Polymerization inhibitor | | 0.1 | 0.1 | 0.1 | 0.1 | 0.1 | 0.1 | 0.1 | 0.1 | 0.1 |
| Total | | 100. 0 | 100. 0 | 100. 0 | 100. 0 | 100. 0 | 100. 0 | 100. 0 | 100. 0 | 100. 0 |

**[Table 9]**

| Ink No. | | 52 | 53 | 54 | 55 | 56 | 57 | 58 |
|---|---|---|---|---|---|---|---|---|
| Polymerizable compound | Acrylate 1 | 53.5 | 33.9 | 33.7 | 33.7 | 33.7 | 33.7 | 33.7 |
| | Acrylate 2 | 40.0 | 40.0 | 40.0 | 40.0 | 40.0 | 40.0 | 40.0 |
| Inorganic particles | Dispersion liquid 1A-1 (1 µm) (zinc oxide) | | 20.0 | 20.0 | 20.0 | 20.0 | 20.0 | 20.0 |
| Silica | Silica 1 (0.17 µm) | 0.2 | | | | | | |
| | Silica 14 (1 µm) | 0.2 | | | | | | |
| | Silica 16 (0.02 µm) | | | 0.2 | | | | |
| | Silica 17 (0.15 µm) | | | | 0.2 | | | |
| | Silica 18 (0.3 µm) | | | | | 0.2 | | |
| | Silica 19 (0.5 µm) | | | | | | 0.2 | |
| | Silica 20 (0.5 µm) | | | | | | | 0.2 |
| | Silica 21 (0.045 µm) | | | | | | | |
| | Silica 22 (0.045 µm) | | | | | | | |
| Photoinitiator | Photoinitiator 1 | 3.0 | 3.0 | 3.0 | 3.0 | 3.0 | 3.0 | 3.0 |
| | Photoinitiator 3 | 3.0 | 3.0 | 3.0 | 3.0 | 3.0 | 3.0 | 3.0 |
| Polymerization inhibitor | | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 |

**[Table 10]**

| Ink No. | | 59 | 60 | 61 | 62 | 63 | 64 | 65 |
|---|---|---|---|---|---|---|---|---|
| Polymerizable compound | Acrylate 1 | 3.7 | | 3.7 | | 33.7 | 33.7 | 33.7 |
| | Acrylate 2 | 40.0 | | 40.0 | | 40.0 | 40.0 | |
| | Acrylate 7 | | | | | | | 40.0 |
| Inorganic particles | Dispersion liquid 1A-1 (1 µm) (zinc oxide) | 20.0 | 20.0 | 20.0 | 20.0 | 20.0 | 20.0 | |
| | dispersion liquid 1I (0.3 µm) (phosphorescent pigment) | | | | | | | 20.0 |
| Silica | Silica 1 (0.17 µm) | 0.2 | 0.2 | 0.2 | 0.2 | | | |
| | Silica 12 (0.4µm) | | | | | | | 0.2 |
| | Silica 14 (1 µm) | | | | | | | |
| | Silica 16 (0.02 µm) | | | | | | | |
| | Silica 17 (0.15 µm) | | | | | | | |
| | Silica 18 (0.3 µm) | | | | | | | |
| | Silica 19 (0.5 µm) | | | | | | | |
| | Silica 20 (0.5 µm) | | | | | | | |
| | Silica 21 (0.045 µm) | | | | | 0.2 | | |
| | Silica 22 (0.045 µm) | | | | | | 0.2 | |
| Photoinitiator | Photoinitiator 1 | 3.0 | 3.0 | 3.0 | 3.0 | 3.0 | 3.0 | 3.0 |
| | Photoinitiator 3 | 3.0 | 3.0 | 3.0 | 3.0 | 3.0 | 3.0 | 3.0 |
| solvent | solvent 1 | 30.0 | 73.7 | | | | | |
| | solvent 2 | | | 30.0 | | | | |
| water | | | | | 73.7 | | | |
| Polymerization inhibitor | | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 |

### 3 Evaluation

The prepared Ink 1 to Ink 65 were evaluated as follows.

### 3-1. Settlement recoverability

A sample of the 10 g was added to a 20 mL glass sample tube and allowed to stand at 25°C for 3 days to deposit solids on the bottom of the sample tube. The sediment was vigorously shaken up and down by hand, and the number of times of shaking that the sediment was loosened was measured.
A: The sediment is almost peeled off from the bottom of the sample tube by 1 to 10 times
B: The sediment is almost peeled off from the bottom of the sample tube by 11 to 30 times
C: The sediment does not peel off from the bottom of the sample tube by 31 times

### 3-2. Injection bending

The ink was filled in an independently driven inkjet head (360npi, ejection amount 27pL, 1024 nozzles) manufactured by Konica Minolta, Inc. and a continuous ejection test was performed for 10 minutes with a stroboscope-synchronized droplet observation device. Thereafter, the injection bending was evaluated according to the following criteria.

### (Reference)

A: Among the 256 nozzles evaluated, all of the 256 nozzles ejected normally
B: Among the 256 nozzles evaluated, 1 nozzle or more and less than 5 nozzles with ejection bending are observed
C: Among the 256 nozzles evaluated, 5 or more injection bending nozzles are observed

### 3-3. Member durability

A maintenance cloth (Savina CK KB, manufactured by Salen Co., Ltd) with each ink adhered thereto was pressed against the nozzle face of KM1024iLHE manufactured by Konica Minolta, Inc. and rubbed 100 times, and then the nozzle face was observed.
A: Substantially no scratch is observed
B: Slightly scratched
C: Large scratch observed

### 3-4. Yellowing

Each of ink 1 to Ink 65 was applied to a ABS-plate base material with a thickness of 2 mm and dimensions of 160 mm × 160 mm. Using a UVLED curing lamp (FireJet FJ100, manufactured by Phoseon Co., Ltd), the base material was irradiated with ultraviolet rays having a wave length of 365 nm, illuminance of 2 W/cm² and a light quantity of 2000 mJ/cm² to cure to prepare each having a thickness of 300 microns. The obtained cured product was allowed to stand still in a constant temperature bath of 60°C for 5 days, and then the state of the cured product was observed as follows.
A: Almost no change after the test as compared with before the test is observed
B: A slight change in color is observed in the cured film as compared with before the test

### 3-5. Weather resistance

Each of ink 1 to Ink 65 was applied to a ABS-plate base material with a thickness of 2 mm and dimensions of 160 mm × 160 mm. Using a UVLED curing lamp (FireJet FJ100, manufactured by Phoseon Co., Ltd), the base material was irradiated with ultraviolet rays having a wave length of 365 nm, illuminance of 2 W/cm² and a light quantity of 2000 mJ/cm² to cure to prepare each having a thickness of 300 microns. The cured products were subjected to a weather resistance test in accordance with JIS B 7753 2007 as follows. Specifically, a sunshine carbon arc lamp type accelerated weathering tester (Sunshine Weather Meter S80, manufactured by Suga Test Instruments Co., Ltd) was used. The base materials including the respective cured products were continuously irradiated with light having an illuminance of 255 W/m² in the wavelength range of 300 nm or more and 700 nm or less for 102 minutes and sprayed with water for 18 minutes for 78 hours.
A: Substantially no change in color is observed in the cured film even after the test as compared with before the test
B: A slight change in the color of the cured film is observed after the test as compared with before the test

Tables 11 to 20 show the results of evaluation of the respective inks. The numerical values listed in the column "silica diameter/inorganic particle diameter" in Tables 11 to 20 are the ratios of the average particle diameter of the silica particles to the median diameter of the inorganic particles used in the respective inks. "A" represents 1/20 or less, "B" represents more than 1/20 and less than 1/1, and "C" represents 1/1 or more.

**[Table 11]**

| | | Example | Example | Example | Example |
|---|---|---|---|---|---|
| Ink No. | | 1 | 2 | 3 | 4 |
| Evaluation | Settlement recoverability | B | B | B | B |
| | Injection bending | B | B | B | B |
| | Member durability | B | B | B | B |
| | Yellowing | B | B | B | B |
| | weather resistance | B | B | B | B |
| silica diameter/inorganic particle diameter | | B | B | B | B |

**[Table 12]**

| | | Example | Example | Example | Example | Example | Example | Example |
|---|---|---|---|---|---|---|---|---|
| Ink No. | | 5 | 6 | 7 | 8 | 9 | 10 | 11 |
| Evaluation | Settlement recoverability | B | B | B | B | B | B | B |
| | Injection bending | A | A | A | A | A | A | A |
| | Member durability | B | B | B | B | B | B | B |
| | Yellowing | B | B | B | B | A | A | A |
| | Weather resistance | B | B | B | B | B | B | B |
| Silica diameter/inorganic particle diameter | | B | B | B | B | B | B | B |

**[Table 13]**

| | | Example | Example | Example | Example | Example | Example | Example |
|---|---|---|---|---|---|---|---|---|
| Ink No. | | 12 | 13 | 14 | 15 | 16 | 17 | 18 |
| Evaluation | Settlement recoverability | B | A | A | A | B | B | B |
| | Injection bending | A | A | A | A | A | A | A |
| | Member durability | B | B | B | B | B | B | B |
| | Yellowing | A | A | A | A | A | A | A |
| | Weather resistance | B | B | B | B | B | B | B |
| Silica diameter/inorganic particle diameter | | B | A | A | A | B | B | B |

**[Table 14]**

| | | Example | Example | Example | Example | Example |
|---|---|---|---|---|---|---|
| Ink No. | | 16 (previously listed) | 19 | 20 | 21 | 22 |
| Evaluation | Settlement recoverability | B | B | B | B | B |
| | Injection bending | A | A | A | B | B |
| | Member durability | B | B | B | B | B |
| | Yellowing | A | A | A | A | A |
| | Weather resistance | B | B | B | B | B |
| Silica diameter/inorganic particle diameter | | B | B | B | B | B |

**[Table 15]**

| | | Example | Example | Example | Example | Example | Example | Example |
|---|---|---|---|---|---|---|---|---|
| Ink No. | | 23 | 24 | 25 | 26 | 27 | 28 | 29 |
| Evaluation | Settlement recoverability | A | A | A | A | A | A | A |
| | Injection bending | A | A | A | A | A | A | A |
| | Member durability | B | B | B | B | B | B | B |
| | Yellowing | A | A | A | A | A | A | A |
| | Weather resistance | B | B | B | B | B | B | B |
| Silica diameter/inorganic particle diameter | | A | A | A | A | A | A | A |

**[Table 16]**

| | | Example | Example | Example | Example | Example | Example | Example |
|---|---|---|---|---|---|---|---|---|
| Ink No. | | 30 | 31 | 32 | 33 | 34 | 35 | 36 |
| Evaluation | Settlement recoverability | B | A | A | B | B | B | B |
| | Injection bending | A | A | A | A | A | A | A |
| | Member durability | B | B | B | B | B | B | B |
| | Yellowing | A | A | A | A | A | A | A |
| | Weather resistance | B | B | B | B | B | B | B |
| Silica diameter/inorganic particle diameter | | B | A | A | B | B | B | B |

**[Table 17]**

| | | Example | Example | Example | Example | Example | Example | Example |
|---|---|---|---|---|---|---|---|---|
| Ink No. | | 23 (previously listed) | 37 | 38 | 39 | 40 | 41 | 42 |
| Evaluation | Settlement recoverability | A | A | A | A | A | A | A |
| | Injection bending | A | A | A | A | A | A | A |
| | Member durability | B | B | B | B | B | B | B |
| | Yellowing | A | A | A | A | A | A | A |
| | Weather resistance | B | B | B | B | B | B | B |
| Silica diameter/inorganic particle diameter | | A | A | A | A | A | A | A |

**[Table 18]**

| | | Example | Example | Example | Example | Example | Example | Example | Example | Example |
|---|---|---|---|---|---|---|---|---|---|---|
| Ink No. | | 43 | 44 | 45 | 46 | 47 | 48 | 49 | 50 | 51 |
| Evaluation | Settlement recoverability | B | B | B | B | B | B | B | B | B |
| | Injection bending | B | B | B | B | A | A | A | B | B |
| | Member durability | B | B | B | B | B | B | B | B | B |
| | Yellowing | B | B | B | B | B | B | B | B | B |
| | Weather resistance | A | A | A | A | A | A | A | A | A |
| Silica diameter/inorganic particle diameter | | B | B | B | B | B | B | B | B | B |

**[Table 19]**

| | | Comp. example | Comp. example | Comp. example | Comp. example | Comp. example | Comp. example | Comp. example |
|---|---|---|---|---|---|---|---|---|
| Ink No. | | 52 | 53 | 54 | 55 | 56 | 57 | 58 |
| Evaluation | Settlement recoverability | A | C | C | C | C | C | C |
| | Injection bending | C | C | C | C | C | C | C |
| | Member durability | B | C | C | C | C | C | C |
| | Yellowing | B | B | B | B | B | B | B |
| | Weather resistance | B | B | B | B | B | B | B |
| Silica diameter/inorganic particle diameter | | - | - | A | B | B | B | B |

**[Table 20]**

| | | Comp. example | Comp. example | Comp. example | Comp. example | Comp. example | Comp. example | Comp. example |
|---|---|---|---|---|---|---|---|---|
| Ink No. | | 59 | 60 | 61 | 62 | 63 | 64 | 65 |
| Evaluation | Settlement recoverability | C | C | C | C | C | C | C |
| | Injection bending | C | C | C | C | C | C | C |
| | Member durability | C | C | C | C | C | C | C |
| | Yellowing | B | B | B | B | B | B | B |
| | Weather resistance | B | B | B | B | B | B | B |
| Silica diameter/inorganic particle diameter | | B | B | B | B | A | A | C |

As is clear from the results of Tables 1 to 20, an ink containing a polymerizable compound, inorganic particles, and silica particles that have been hydrophobized and did not have a polymerizable group was prepared. The average particle diameter of the silica particles was smaller than the median diameter of the inorganic particles, and the content of the silica particles on a mass basis was smaller than the content of the inorganic particles on a mass basis. The active energy ray-curable inkjet ink was excellent in redispersibility of settled inorganic particles. Furthermore, although the inkjet ink contains inorganic pigments, a decrease in the durability of members such as the inkjet head and a decrease in the ejection property of the ink are less likely to occur.

### [Experiment 2]

The following experiment was performed in order to confirm a difference in the settlement recoverability depending on the D₅₀ and D₉₀ of the inorganic particles. Note that in the following description, a description of the content common to experiment 1 will be omitted, and the points of difference from experiment 1 will be described. In addition, the materials used and their abbreviations are the same as in Example 1, and thus the description thereof is omitted.

### 1. Inkjet ink preparation

### 1-1. Preparation of dispersion liquid

Fifty (50) parts by mass of the inorganic particles 4 and 50 parts by mass of the acrylate 1 were added into a polypropylene vessel together with 100 parts by mass of zirconia beads having a average particle diameter of 0.3 mm. A dispersion treatment was performed for 30 minutes using a paint shaker, and the zirconia beads were removed to prepare a dispersion liquid 2A.

The dispersion liquid 2B was prepared in the same manner as the preparation of the dispersion liquid 2A except that the inorganic particles were changed to the inorganic particles 5.

The dispersion liquid 2C was prepared in the same manner as the dispersion liquid 2B except that the dispersion time was changed to 8 hours.

### 1-2. Preparation of Ink

The polymerizable compounds, the dispersion liquids, the silica particles, the photopolymerization initiators, the thermal curing agents, the organic solvents, waters, and the polymerization inhibitors were mixed in the proportions listed in Table 21, and the mixtures were filtered through a 30 µm polypropylene pleated filter (manufactured by ROKI TECHNO CO., LTD) to obtain the inks 66 to 73. The numerical values described in parentheses in the columns of "Inorganic particles" and "Silica particles" in Table 21 are the median diameter and the average particle diameter of each particle in the dispersion liquid.

In addition, the ink 66 to ink 73 were diluted with dipropylene glycol diacrylate, and D₅₀ and D₉₀ of the inorganic particles contained in each ink were measured using a particle diameter distribution analyzer (LUMiSizer, manufactured by LUM Japan Co., Ltd). The measured D₅₀ and D₉₀ and D₅₀/D₉₀ are also shown in Table 21.

**[Table 21]**

| Ink No. | | 66 | 67 | 68 | 69 | 70 | 71 | 72 | 73 |
|---|---|---|---|---|---|---|---|---|---|
| Polymerizable compound | Acrylate 1 | 45.7 | 45.7 | 45.7 | 33.7 | 33.7 | 33.7 | 33.7 | 3.7 |
| | Acrylate 7 | 40.0 | 40.0 | 40.0 | 40.0 | 40.0 | 40.0 | 40.0 | 40.0 |
| Inorganic particles | dispersion liquid 2A (7µm) (phosphorescent pigment) | 8.0 | | | 20.0 | | | | |
| | dispersion liquid 2B (22 µm) (phosphorescent pigment) | | 8.0 | | | 20.0 | | 20.0 | 50.0 |
| | dispersion liquid 2C (2C (1 µm) (phosphorescent pigment) | | | 8.0 | | | 20.0 | | |
| Silica | Silica 1 (0.17 µm) | 0.2 | 0.2 | 0.2 | 0.2 | 0.2 | 0.2 | | |
| | silica 2 (0.1 µm) | | | | | | | 0.2 | 0.2 |
| Photoinitiator | Photoinitiator 1 | 3.0 | 3.0 | 3.0 | 3.0 | 3.0 | 3.0 | 3.0 | 3.0 |
| | Photoinitiator 3 | 3.0 | 3.0 | 3.0 | 3.0 | 3.0 | 3.0 | 3.0 | 3.0 |
| Polymerization inhibitor | | 0.1 | 0.1 | 0.1 | 0.1 | 0.1 | 0.1 | 0.1 | 0.1 |
| Total | | 100. 0 | 100. 0 | 100. 0 | 100. 0 | 100. 0 | 100. 0 | 100. 0 | 100. 0 |
| D₅₀ (µm) | | 7.0 | 2.2 | 1.0 | 7.0 | 2.2 | 1.0 | 2.2 | 2.2 |
| D₉₀ (µm) | | 11.0 | 4.0 | 2.5 | 11.0 | 4.0 | 2.5 | 4.0 | 4.0 |
| D₅₀/D₉₀ | | 0.64 | 0.55 | 0.40 | 0.64 | 0.55 | 0.40 | 0.55 | 0.55 |

The inks 66 to 73 were evaluated in the same manner as in Experiment 1. The results are shown in Table 22.

**[Table 22]**

| | | Example | Example | Example | Example | Example | Example | Example | Example |
|---|---|---|---|---|---|---|---|---|---|
| Ink No. | | 66 | 67 | 68 | 69 | 70 | 71 | 72 | 73 |
| Evaluation | Settlement recoverability | A | B | B | A | B | B | A | A |
| | Injection bending | A | A | A | A | A | A | A | A |
| | Member durability | B | B | B | B | B | B | B | B |
| | Yellowing | A | A | A | A | A | A | A | A |
| | Weather resistance | B | A | A | B | A | A | A | A |
| Silica diameter/inorganic particle diameter | | A | B | B | A | B | B | A | A |

As is clear from the results of Tables 21 and 22, the larger the D₉₀ of the inorganic particles, the higher the settlement recoverability of the inorganic particles. In addition, the smaller the D₅₀/D₉₀ of the inorganic particles, the higher the weather resistance of the cured product.

Although embodiments of the present invention have been described and illustrated in detail, it is clearly understood that the same is by way of illustration and example only and not limitation, the scope of the present invention should be interpreted by terms of the appended claims.

## Claims

1. An active energy ray-curable inkjet ink, comprising:
a polymerizable compound; an inorganic particle; and a silica particle, wherein
the silica particle is hydrophobized and has no polymerizable group,
an average particle diameter of the silica particle is smaller than a median diameter of the inorganic particle, and
a content of the silica particle on a mass basis is less than a content of the inorganic particle on the mass basis.

2. The active energy ray-curable inkjet ink according to claim 1, wherein
the polymerizable compound includes a (meth)acrylate.

3. The active energy ray-curable inkjet ink according to claim 2, wherein
the (meth)acrylate includes a monofunctional polymerizable compound having an aromatic ring.

4. The active energy ray-curable inkjet ink according to any one of claims 1 to 3, wherein
the active energy ray-curable inkjet ink is substantially free of water and substantially free of organic solvent.

5. The active energy ray-curable inkjet ink according to any one of claims 1 to 4, wherein
the average particle diameter of the silica particle is 1/20 or less of the median diameter of the inorganic particle.

6. The active energy ray-curable inkjet ink according to any one of claims 1 to 5, wherein
a content of the silica particle is 0.01% by mass or more and 5% by mass or less based on a total mass of the active energy ray-curable inkjet ink.

7. The active energy ray-curable inkjet ink according to any one of claims 1 to 6, wherein
the inorganic particle has an average particle diameter of 0.5 µm or more and 5 µm or less.

8. The active energy ray-curable inkjet ink according to any one of claims 1 to 7, wherein
the inorganic particle has D₅₀/D₉₀ of 0.1 or more and 0.9 or less.

9. The active energy ray-curable inkjet ink according to any one of claims 1 to 8, wherein
the inorganic particle is a phosphorescent pigment.

10. The active energy ray-curable inkjet ink according to any one of claims 1 to 9, further comprising:
a thermal curing agent.

11. A method for forming a cured product, comprising:
applying the active energy ray-curable inkjet ink according to any one of claims 1 to 10 to a base material; and
irradiating the applied active energy ray-curable inkjet ink with an active energy ray.

12. The method according to claim 11, wherein
the applying the active energy ray-curable inkjet ink to the base material is performed while circulating the active energy ray-curable inkjet ink.

13. A cured product formed from the active energy ray-curable inkjet ink according to any one of claims 1 to 10.
